# EUROPÄISCHE PATENTSCHRIFT

(11) **EP 1 860 826 B1**
(45) Veröffentlichungstag und Bekanntmachung des Hinweises auf die Patenterteilung: **25.03.2015**
(21) Anmeldenummer: 06010537.6
(22) Anmeldetag: 22.05.2006
(51) Int. Cl.: H04W 36/30

(54) **Verfahren, Kommunikationssystem, zentrale Schnittstelleneinrichtung und mobiles Endgerät zum Betreiben einer drahtlosen Kommunikationsverbindung**
Method, communications system, central interface device and mobile terminal for operating a wireless communication link
Procédé, système de communication, dispositif d'interface centrale et terminal mobile pour l'exploitation d'une communication sans fil

(43) Veröffentlichungstag der Anmeldung: 28.11.2007
(73) Patentinhaber: Unify GmbH & Co. KG, 81379 München (DE)
(72) Erfinder: Baumann, Alexander, 80337 München (DE); Brieskorn, Jürgen, 82269 Geltendorf (DE)
(74) Vertreter: Fritzsche, Thomas

(56) Entgegenhaltungen:
- EP-A- 0 876 073
- WO-A-2005/071998
- WO-A-2006/053102
- US-A- 5 463 674
- US-A1- 2004 266 426

## Beschreibung

Die Erfindung betrifft ein Verfahren zum Betreiben einer drahtlosen Kommunikationsverbindung gemäß dem Oberbegriff des Anspruchs 1 sowie ein Kommunikationssystem als Anordnung zum Betreiben einer drahtlosen Kommunikationsverbindung gemäß dem Oberbegriff des Anspruchs 14, sowie ein mobiles Endgerät zum Betreiben einer drahtlosen Kommunikationsverbindung gemäß dem Oberbegriff des Anspruchs 16.

In der Kommunikationstechnologie haben sich verschiedene Kommunikationsstandards etabliert, die eine Kommunikation zwischen entsprechend diesen Standards ausgebildeten Endgeräten ermöglichen. Gerade bei den parallel existierenden Funkkommunikationsstandards, wie dem "Globile System Mobile" (GSM) Standard, dem "Universal Mobile Telecommunicat.ions System" (UMTS) Standard, dem "Digital Enhanced Cordless Telecommunications" (DECT), oder dem "Wireless Local Area Network" (WLAN) Standard, die eine Kommunikation durch tragbare bzw. mobile Endgeräte ermöglichen, tritt inzwischen immer häufiger der Fall auf, dass Kommunikationsteilnehmer Nutzer mehrerer dieser Standards sind und somit mehrere Endgeräte mit sich führen. Diese Entwicklung hat dazu geführt, dass nutzerseitig ein Bedarf nach einem Endgerät, welches nach mehreren Standards funktioniert, entstanden ist. Diese Anforderung tritt insbesondere im geschäftlichen Bereich auf.

Hierzu sind so genannte Dual Mode bzw. Multi Mode Geräte entwickelt worden, die in der Lage sind, nach mehr als einem Standard zu funktionieren, wobei sich diese Entwicklung dahingehend fortsetzen wird, dass diese Geräte sogar in einem heterogenen Umfeld, bei dem Funkversorgungsbereiche unterschiedlicher Standards angrenzen bzw. überlappen, eine bestehende Verbindung sogar standardübergreifend betreiben, insbesondere wenn bei einem Übergang von einem nach einem ersten Kommunikationsstandard funktionierenden Funkversorgungsbereich zu einem nach einem zweiten Kommunikationsbereich funktionierenden Funkversorgungsbereich erfolgt und dabei ein so genanntes Seamless Handover durchgeführt wird.

Aus der US 2004/0266462 A1 ist eine Erweiterung eines privaten, d.h. lokal begrenzten, Telefonnetzwerks zu einem so genannten "Wide Area Network" (WAN) bekannt, bei der ein so genannter Softswitch, der eine drahtlose Nebenstellenfunktionalität innerhalb eines WLAN Netzwerks bereitstellt, genutzt wird, um die Nebenstellenfunktionalität auf ein Mobilfunknetz zu übertragen.

Die der Erfindung zugrunde liegende Aufgabe ist es, ein Verfahren sowie eine Anordnung anzugeben, welche das Betreiben eines Dual Mode Endgerätes in einem Umfeld der beschriebenen Art ermöglichen.

Diese Aufgabe wird gelöst durch ein Verfahren mit den Merkmalen des Patentanspruchs 1, durch ein Kommunikationssystem mit den Merkmalen des nebengeordneten Anspruchs 14, sowie durch das mobile Endgerät mit den Merkmalen des Patentanspruches 16.

Nach dem erfindungsgemäßen Verfahren zum Betreiben einer drahtlosen Kommunikationsverbindung mit zumindest einer ersten nach einem ersten lokale Netzwerke definierenden Standard, insbesondere dem IEEE 802.11 oder seinen Derivaten, funktionierenden und einen ersten Versorgungsbereich eines lokalen Netzwerks bereitstellenden stationären Funksende-/ Funkempfangseinrichtung, mit zumindest einer zweiten nach einem zweiten Standard, insbesondere GSM, funktionierenden und einem zweiten Funkversorgungsbereich bereitstellenden zweiten stationären Funksende-/Funkempfangseinrichtung, wobei der erste

Funkversorgungsbereich und der zweite Funkversorgungsbereich zumindest teilweise überlappen, sowie mit einem gemäß dem ersten und dem zweiten Standard betreibbaren mobilen Funksende-/Funkempfangsgerät und einer zentralen Schnittstelleneinrichtung zwischen dem lokalen Netzwerk und einem vermittelten Telefonnetz wird seitens des mobilen Funksende-/Funkempfangsgerätes eine Sprachdatenübertragung gemäß dem ersten Standard priorisiert. Des Weiteren wird zumindest eine Messung von zumindest einer die Qualität einer gemäß des ersten Standards funktionierenden Funkverbindung indizierenden Größe, insbesondere eine Empfangsfeldstärkemessung, durchgeführt sowie eine zumindest die Messergebnisse wiedergebende und einer das lokale Netzwerk betreffenden Topologieinformation enthaltende erste Nachricht an die zentrale Schnittstelleneinrichtung übermittelt. Ferner trifft die zentrale Schnittstelleneinrichtung zumindest auf Grundlage einer der ersten Nachrichten eine Entscheidung über die Einleitung eines Wechsels des Betreibens einer bestehenden Sprachdatenkommunikationsverbindung vom ersten Funkversorgungsbereich zum zweiten Funkversorgungsbereich, wobei das mobile Funksende-/Funkempfangsgerät aufgrund der Entscheidung diesen Wechsel einleitet.

Der Vorteil des erfindungsgemäßen Verfahrens liegt darin, dass in einem Kommunikationssystem, bei welchem Sprachdatenübertragungen priorisiert mittels einer in der Regel kostengünstigeren Drahtloskommunikation über ein lokales Netzwerk erfolgt, im Falle von sich verschlechternden Verbindungszuständen eine Übergabe der Kommunikation im Sinne eines Handovers durchgeführt werden kann, welche angepasst an das jeweilige lokale Netzwerk erfolgt. Die Anpassung wird dabei dadurch möglich, dass für die Einleitung dieser Übergabe durch die zentrale Schnittstelleneinrichtung erfolgt und somit Kenntnisse, die eine derartige zentrale Einheit aufweist, in vorteilhafter Weise für diese Übergabe genutzt werden können und gängige mobile Funksende-/Funkempfangseinrichtungen für das vorteilhafte erfindungsgemäße Verfahren weitestgehend ohne Anpassungen und Veränderungen genutzt werden kann.

Lediglich für die vorteilhafte Weiterbildung, bei der das mobile Funksende-/Funkempfangsgerät (Funksende-/Funkempfangseinrichtung) unter Auswertung von gespeicherten Informationen eine Entscheidung über ein Aktivieren einer Kommunikation gemäß dem zweiten Standard trifft und bei positiver Entscheidung den Wechsel durchführt, sowie bei negativer Entscheidung die Sprachdatenkommunikation weiterhin über eine Kommunikationsverbindung gemäß dem ersten Standard betreibt, ist eine geringfügige Anpassung notwendig. Diese bringt aber den Vorteil mit sich, dass das mobile Funksende-/Funkempfangsgerät flexibel auf lokale Eigenschaften bzw. Vorgaben eingehen kann. So ist es beispielsweise möglich, dass am Ort der ersten stationären Funksende-/Funkempfangseinrichtung ein Umschalten auf eine Kommunikation gemäß dem zweiten Standard nicht erwünscht ist, wie es beispielsweise in einem Krankenhaus der Fall wäre.

Vorzugsweise wird bei dem erfindungsgemäßen Verfahren das Ermitteln der Messergebnisse zyklisch wiederholt. Dies hat den Vorteil, dass stets aktuelle Verbindungseigenschaften verfügbar sind.

Auch wird bevorzugt das Übermitteln der ersten Nachricht zyklisch durchgeführt, so dass die zentrale Schnittstelleneinrichtung ebenfalls ein aktuelles Bild der Verbindungseigenschaften aufweist.

Besonders vorteilhaft ist es dabei, wenn in die erste Nachricht eine die erste stationäre Funksende-/Funkempfangseinrichtung identifizierende Information integriert wird. Dies ermöglicht es der zentralen Schnittstelleneinrichtung nachzuvollziehen, über welche erste Funksende-/Funkempfangseinrichtung das mobile Funksende-/Funkempfangsgerät betrieben wird.

Dies ist vor allem für die vorteilhafte Weiterbildung bei der als Grundlage der Entscheidung seitens der zentralen Schnittstelleneinrichtung auf als erste Tabelle organisierte Inhalte zugegriffen wird, in besonders vorteilhafter Weise einsetzbar, da die zentrale Schnittstelleneinrichtung eine Auswertung der Inhalte anhand der Information bezüglich der ersten stationären Funksende-/Funkempfangseinrichtung durchführen kann.

Vorzugsweise enthält dabei die erste Tabelle Topologieinformationen über das lokale Netz, wobei die Topologieinformationen bevorzugt derart organisiert in einem Speicher gehalten werden, dass die geografische Lage von ersten stationären Funksende-/Funkempfangseinrichtungen ermittelbar ist. Diese Weiterbildungen haben den Vorteil, dass anhand der Identifizierungsinformation die zentrale Schnittstelleneinrichtung in die Lage versetzt wird, den Ort der ersten stationären Funksende-/Funkempfangseinrichtung zu ermitteln und zugleich deren Lage in Bezug auf die benachbarten ersten Funksende-/Funkempfangseinrichtungen auswerten kann. Dadurch wird es möglich, ein Handover gezielt nur dann durchzuführen bzw. einzuleiten, wenn es sich bei der ersten stationären Funksende-/Funkempfangseinrichtung um eine Einrichtung handelt, die sich in einem Randbereich des lokalen Netzes befindet und es tatsächlich bei einer weiteren Bewegung des mobilen Funksende-/Funkempfangsgerätes mit einer weiteren Verschlechterung bzw. einem Abbruch der Verbindung gemäß dem ersten Standard zu rechnen ist und hier eine Übergabe an eine Verbindung gemäß dem zweiten Standard ein unterbrechungsfreies Fortführen einer aktuellen Sprachdatenkommunikation gewährleisten kann.

Bei einer weiteren Fortbildung des erfindungsgemäßen Verfahrens wird die erste Tabelle derart organisiert in einem Speicher gehalten, dass sie auch Aktivierungsinformationen zu den jeweiligen ersten stationären Funksende-/Funkempfangseinrichtungen enthält.

Alternativ hierzu hält das mobile Funksende-/Funkempfangsgerät die Informationen insbesondere als zweite Tabelle organisiert in einem Speicher des Endgerätes vor. Bei dieser Variante ergibt sich der Vorteil, dass ein Nutzer einstellen kann, ob an dem aktuellen Ort eine Aktivierung einer Kommunikationsverbindung gemäß dem zweiten Standard erlaubt bzw. erwünscht ist oder nicht.

Bevorzugt sind dabei die Informationen als eine Zuordnung von ersten stationären Funksende-/Funkempfangseinrichtungen identifizierenden SSID-Werten zu einer Aktivierungsinfo organisiert, so dass bei einer Übergabe von einem ersten Funksende/Funkempfangsgerät zu einem anderen ersten stationären Funksende-/Funkempfangsgerät das mobile Funksende-/Funkempfangsgerät stets lokal gültige Aktivierungsinformationen entnehmen kann.

Vorzugsweise funktioniert die zentrale Schnittstelleneinrichtung als eine eine Nebenstellenfunktionalität bereitstellende Einrichtung. Dabei steht die zentrale Schnittstelleneinrichtung bevorzugt zumindest teilweise schnurgebunden mit dem lokalen Netz in Verbindung. Dies ermöglicht auch einen Empfang und Versenden von Nachrichten bei drahtlosen Verbindungen geringer Qualität bzw. bei deren Abbruch. Alternativ oder ergänzend hierzu funktioniert die zentrale Schnittstelleneinrichtung derart, dass sie direkt und/oder unter Zuhilfenahme des lokalen Netzes drahtlos mit dem mobilen Funksende-/Funkempfangsgerät kommunizieren kann. Hierdurch verfügt die zentrale Schnittstelleneinrichtung über eine erhöhte Flexibilität und Ausfallsicherheit gegenüber einem rein schnurgebundenen Ansatz.

Die der Erfindung zugrunde liegende Aufgabe wird auch durch ein Kommunikationssystem einer zentralen Schnittstelleneinrichtung sowie ein mobiles Endgerät gelöst, die ihren Beitrag zur Lösung dadurch leisten, dass sie Mittel zum Durchführen des Verfahrens aufweisen.

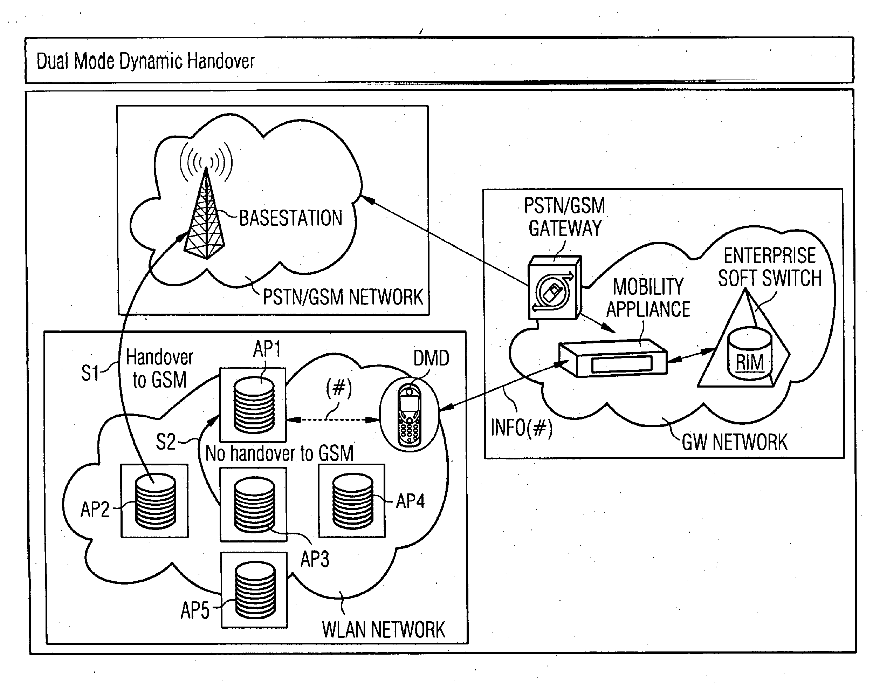

Weitere Vorteile sowie Einzelheiten werden anhand eines in der einzigen Figur dargestellten Ausführungsbeispiels näher erläutert. Dabei zeigt die
- Figur: eine schematische Darstellung eines das erfindungsgemäße Verfahren durchführenden Kommunikationssystems.

In der Figur ist eine schematische Darstellung eines Kommunikationssystems zu erkennen, in welchem das erfindungsgemäße Verfahren besonders vorteilhaft zum Tragen kommt.

Zu sehen sind ein lokales Netzwerk WLAN NETWORK, welches eine Vielzahl von stationären Funksende-/Funkempfangseinrichtungen, so genannten Access Points AP1 bis AP5 enthält, die eine Kommunikation über eine Luftschnittstelle, welche gemäß dem Standard IEEE 802.11 ausgestaltet ist, ermöglichen.

Ferner ist ein zweiter Funkversorgungsbereich PSTN/GSM NETWORK zu erkennen, welcher über eine Vielzahl von Basisstationen BASESTATION eine vermittelte nach dem GSM-Standard funktionierende Kommunikation ermöglicht. Dabei ist zur Vereinfachung lediglich nur eine Basisstation BS dargestellt.

Ferner ist ein Netzwerk aus verteilten Einrichtungen zu erkennen, welches sowohl zu dem lokalen Netz WLAN NETWORK als auch zu dem Funknetz PSTN/GSM NETWORK eine Verbindung aufweist und eine Funktion im Sinne einer Nebenstellenanlage bereitstellt. Dieses Netzwerk GW NETWORK kommuniziert dabei mit dem vermittelten Funknetzwerk PSTN/GSM NETWORK über ein so genanntes Gateway PSTN/GSM GATEWAY. Ferner kommuniziert es über WLAN mit einem mobilen Funksende-/Funkempfangsgerät DMD, welches gemäß dem Ausführungsbeispiel der Erfindung als so genanntes Dual Mode Device DMD ausgestaltet ist und daher sowohl eine Verbindung über WLAN als auch eine Verbindung über GSM führen kann. Zudem hat es eine Verbindung zu einer als Enterprise Soft Switch bezeichneten Station ESS.

Zusätzlich weist dieses Netzwerk GW NETWORK eine so genannte RIM-Tabelle RIM auf, welche beispielsweise, wie in der Darstellung zu entnehmen, als eine dezentral angeordnete in der Enterprise Soft Switch untergebrachte Datenbasis ESS ausgestaltet sein kann und stellt einer ebenfalls in dem Netzwerk GW NETWORK enthaltenen als so genannte Mobility Appliance bekannten zentralen Schnittstelleneinrichtung MOBILITY APPLIANCE Daten zur Verfügung.

Bei diesen Daten handelt es sich dabei um topografische Informationen #, die es der zentralen Schnittstelleneinrichtung MOBILITY APPLIANCE ermöglichen, aufgrund einer Identifikationsinformation # die genaue Lage eines Access Points AP1 bis AP5 zu bestimmen, vor allem aber auch, ob der jeweilige Access Point AP1 bis AP5 sich am Rand des lokalen Netzwerks befindet und somit zumindest teilweise benachbarte Bereiche ohne Funkabdeckung aufweist oder ob sich der Access Point so innerhalb des Netzwerkes WLAN NETWORK befindet, dass er rund herum von Funkversorgungsbereichen umgeben ist.

Mit dieser Info # kann erfindungsgemäß auf vorteilhafte Weise somit entschieden werden, ob ein Handover von einer WLAN-Verbindung, welches das Dual Mode Device DMD unterhält, ins vermittelte Netzwerk PSTN/GSM NETWORK transferiert werden soll oder nicht.

Durch diese Vorgehensweise wird es möglich, Gespräche günstig mittels Voice Over IP bevorzugt also im WLAN zu führen und erst dann, wenn wirklich zu erwarten ist, dass sich das Dual Mode Device DMD aus dem Netz WLAN NETWORK bewegt, auf ein in der Regel teueres vermitteltes Gespräch über das öffentliche Funknetz PSTN/GSM NETWORK umzuschalten.

Damit nun die zentrale Schnittstelleneinrichtung MOBILITY APPLIANCE weiß, wann eine derartige Umschaltung zu erfolgen hat, ermittelt das Dual Mode Device DMD in regelmäßigen Abständen die empfangene Signalfeldstärke, der auch als so genannter RSSI-Wert bekannt ist, und übermittelt diese gemeinsam mit einer Identifikationsinformation über eine Nachrichteninfo an die zentrale Schnittstelleneinrichtung.

Nach jedem Empfang einer solchen Nachrichteninfo ermittelt die zentrale Schnittstelleneinrichtung über die Tabelle RIM, wo sich der aktuelle Access Point AP1 bis AP5 des Netzes WLAN befindet, an dem das Dual Mode Device DMD angeschlossen ist. Indiziert nun diese Information #, dass der Access Point AP sich in einem Randbereich befindet und ist der RSSI-Wert niedrig, so dass eine Unterbrechung einer aktuellen Verbindung wahrscheinlich wäre, so sendet die zentrale Schnittstelleneinrichtung an das Dual Mode Device DMD seinerseits eine Nachricht INFO(#) mit der Empfehlung, von WLAN auf GSM umzuschalten und eine etwaige Verbindung hierauf zu übertragen bzw. zukünftige hierüber zu führen.

Gemäß dem Verfahren nach der Erfindung wird nun das Dual Mode Device in einem ersten Schritt S1 das Handover zum GSM durchführen.

Alternativ oder ergänzend enthält das Dual Mode Device DMD seinerseits wiederum Informationen darüber, ob an dem aktuellen Ort, an dem es sich befindet, eine GSM-Verbindung überhaupt erlaubt oder gewollt ist. Beispielsweise könnte es sich in einem Krankenhaus befinden, wo der Funk über GSM deaktiviert sein muss. In einem solchen Fall wird nun in einer möglichen Ausgestaltung dem Benutzer des Dual Mode Devices DMD eine Nachricht angezeigt, mit der er über die notwendige Aktivierung des GSM informiert wird und worauf er dann diese aktiv zulassen kann oder diese ablehnt. Im letzteren Fall würde in einem zweiten Schritt S2 kein Handover zu GSM erfolgen und eine Unterbrechung in Kauf genommen werden oder mittels anderer Verfahren.

## Patentansprüche

1. Verfahren zum Betreiben einer drahtlosen Kommunikationsverbindung, mit zumindest einer nach einem ersten lokale Netzwerke definierenden Standard, insbesondere dem IEEE 802.11 oder seinen Derivaten, funktionierenden und einen ersten Funkversorgungsbereich (WLAN NETWORK) eines lokalen Netzwerks bereitstellenden ersten stationären Funksende-/Funkempfangseinrichtung (AP1...AP5), mit zumindest einer nach einem zweiten Standard, insbesondere GSM, funktionierenden und einen zweiten Funksversorgungsbereich (PSTN/GSM NETWORK) bereitstellenden zweiten stationären Funksende-/Funkempfangseinrichtung(BASESTATION), wobei der erste Funkversorgungsbereich (WLAN NETWORK) und der zweite Funkversorgungsbereich (PSTN/GSM NETWORK) zumindest teilweise überlappen, sowie mit einem gemäß dem ersten und dem zweiten Standard betreibbaren mobilen Funksende-/Funkempfangsgerät (DMD) und mit einer zentralen Schnittstelleneinrichtung (MOBILITY APPLIANCE) zwischen dem lokalen Netzwerk (WLAN NETWORK) und einem vermittelten Telefonnetz (PSTN/GSM NETWORK), **dadurch gekennzeichnet**,
a) dass seitens des mobilen Funksende-/Funkempfangsgerätes (DMD)
a1) eine Sprachdatenübertragung gemäß dem ersten Standard priorisiert wird,
a2) zumindest eine Messung von zumindest einer die Qualität einer gemäß dem ersten Standard funktionierenden Funkverbindung indizierenden Größe, insbesondere eine Empfangsfeldstärkemessung, durchgeführt wird,
a3) eine zumindest die Messergebnisse wiedergebende und eine das lokale Netzwerk betreffende Topologieinformation enthaltende erste Nachricht (#) an die zentrale Schnittstelleneinrichtung (MOBILITY APPLIANCE) übermittelt wird,
b) dass die zentrale Schnittstelleneinrichtung (MOBILITY APPLIANCE) zumindest auf Grundlage einer der ersten Nachrichten (#) eine Nachricht (INFO (#)) mit einer Empfehlung über die Einleitung eines Wechsels des Betreibens einer bestehenden Sprachdatenkommunikationsverbindung vom ersten Funkversorgungsbereich zum zweiten Funkversorgungsbereich an das mobile Funksende-/Funkempfangsgerät (DMD) sendet,
c) dass das mobile Funksende-/Funkempfangsgerät (DMD) eine Entscheidung unter Auswertung von gespeicherten Informationen über ein Aktivieren einer Kommunikation gemäß dem zweiten Standard trifft und
c1) bei positiver Entscheidung den Wechsel durchführt (S1),
c2) bei negativer Entscheidung die Sprachdatenkommunikation weiterhin über eine Kommunikation gemäß dem ersten Standard betreibt (S2).

2. Verfahren nach Anspruch 1, **dadurch gekennzeichnet, dass** das Ermitteln der Messergebnisse zyklisch wiederholt wird.

3. Verfahren nach Anspruch 2, **dadurch gekennzeichnet, dass** das Übermitteln der ersten Nachricht (#) zyklisch wiederholt wird.

4. Verfahren nach einem der vorhergehenden Ansprüche, **dadurch gekennzeichnet, dass** in die erste Nachricht (#) eine die zweite Funksende-/Funkempfangseinrichtung identifizierende Information integriert wird.

5. Verfahren nach einem der vorhergehenden Ansprüche, **dadurch gekennzeichnet, dass** als Grundlage der Entscheidung seitens der zentralen Schnittstelleneinrichtung (MOBILITY APPLIANCE) auf als erste Tabelle (RIM) organisierte Inhalte zugegriffen wird.

6. Verfahren nach dem vorhergehenden Anspruch, **dadurch gekennzeichnet, dass** die erste Tabelle (RIM) Topologieinformation über das lokale Netz enthält.

7. Verfahren nach dem vorhergehenden Anspruch, **dadurch gekennzeichnet, dass** die Topologieinformation derart organisiert in einem Speicher gehalten wird, dass die geographische Lage von ersten stationären Funksende-/Funkempfangseinrichtungen (AP1...AP5) ermittelbar ist.

8. Verfahren nach Anspruch 5, **dadurch gekennzeichnet, dass** die erste Tabelle (RIM) derart organisiert in einem Speicher gehalten wird, dass sie Aktivierungsinformationen zu den jeweiligen ersten stationären Funksende-/Funkempfangseinrichtungen enthält.

9. Verfahren nach einem der vorhergehenden Ansprüche, **dadurch gekennzeichnet, dass** das Funksende-/Funkempfangsgerät (DMD) die Informationen, insbesondere als zweite Tabelle organisiert, in einem Speicher des Funksende-/ Funkempfangsgeräts vorhält.

10. Verfahren nach dem vorhergehenden Anspruch, **dadurch gekennzeichnet, dass** die Informationen als eine Zuordnung von erste stationäre Funksende-/Funkempfangseinrichtungen (AP1...AP5) identifizierenden SSID Werten zu einer Aktivierungsinfo organisiert ist.

11. Verfahren nach einem der vorhergehenden Ansprüche, **dadurch gekennzeichnet, dass** die zentrale Schnittstelleneinrichtung (MOBILITY APPLIANCE) als eine Nebenstellenfunktionalität bereitstellende Einrichtung (ENTERPRISE SOFT SWITCH) funktioniert.

12. Verfahren nach dem vorhergehenden Anspruch, **dadurch gekennzeichnet, dass** die zentrale Schnittstelleneinrichtung (MOBILITY APPLIANCE) zumindest teilweise schnurgebunden mit dem lokalen Netz in Verbindung steht.

13. Verfahren nach dem vorhergehenden Anspruch, **dadurch gekennzeichnet, dass** die zentrale Schnittstelleneinrichtung (MOBILITY APPLIANCE) derart funktioniert, dass sie direkt und/oder unter Zuhilfenahme des lokalen Netzes (WLAN NETWORK) drahtlos mit dem mobilen Funksende-/Funkempfangsgerät (DMD) kommunizieren kann.

14. Kommunikationssystem als Anordnung zum Betreiben einer drahtlosen Kommunikationsverbindung, mit zumindest einer nach einem ersten lokalen Netzwerke definierenden Standard, insbesondere dem IEEE 802.11 oder seinen Derivaten, funktionierenden und einen ersten Funkversorgungsbereich (WLAN NETWORK) eines lokalen Netzwerks bereitstellenden ersten stationären Funksende-/Funkempfangseinrichtung (AP1...AP5), mit zumindest einer nach einem zweiten Standard, insbesondere GSM, funktionierenden und einen zweiten Funksversorgungsbereich (PSTN/GSM NETWORK) bereitstellenden zweiten stationären Funksende-/Funkempfangseinrichtung (BASESTATION), wobei der erste Funkversorgungsbereich (WLAN NETWORK) und der zweite Funkversorgungsbereich (PSTN/GSM NETWORK) zumindest teilweise überlappen, sowie mit einem gemäß dem ersten und dem zweiten Standard betreibbaren mobilen Funksende-/Funkempfangsgerät (DMD) und mit einer zentralen Schnittstelleneinrichtung (MOBILITY APPLIANCE) zwischen dem lokalen Netzwerk (WLAN NETWORK) und einem vermittelten Telefonnetz (PSTN/GSM NETWORK), **dadurch gekennzeichnet**,
a) dass seitens des mobilen Funksende-/Funkempfangsgerätes (DMD)
a1) Mittel zum Priorisieren vorhanden sind, mit denen eine Sprachdatenübertragung gemäß dem ersten Standard priorisiert wird,
a2) Mittel zum Messen vorhanden sind, mit denen zumindest eine Messung von zumindest einer die Qualität einer gemäß dem ersten Standard funktionierenden Funkverbindung indizierenden Größe, insbesondere eine Empfangsfeldstärkemessung, durchgeführt wird,
a3) Mittel zum Übermitteln vorhanden sind, mit denen eine zumindest die Messergebnisse wiedergebende und eine das lokale Netzwerk betreffende Topologieinformation enthaltende erste Nachricht (#) an die zentrale Schnittstelleneinrichtung (MOBILITY APPLIANCE) übermittelt wird,
b) dass die zentrale Schnittstelleneinrichtung (MOBILITY APPLIANCE) zumindest auf Grundlage einer der ersten Nachrichten (#) eine Nachricht (INFO (#) mit einer Empfehlung über die Einleitung eines Wechsels des Betreibens einer bestehenden Sprachdatenkommunikationsverbindung vom ersten Funkversorgungsbereich zum zweiten Funkversorgungsbereich an das mobile Funksende-/Funkempfangsgerät (DMD) sendet,
c) dass das mobile Funksende-/Funkempfangsgerät (DMD) eine Entscheidung unter Auswertung von gespeicherten Informationen über ein Aktivieren einer Kommunikation gemäß dem zweiten Standard trifft und
c1) bei positiver Entscheidung den Wechsel durchführt (S1),
c2) bei negativer Entscheidung die Sprachdatenkommunikation weiterhin über eine Kommunikation gemäß dem ersten Standard betreibt (S2).

15. Kommunikationssystem nach Anspruch 14 zum Betreiben einer drahtlosen Kommunikationsverbindung, gekennzeichnet durch weitere Mittel zum Durchführen des Verfahrens nach einem der Ansprüche 2 bis 13.

16. Mobiles Endgerät (DMD) zum Betreiben einer drahtlosen Kommunikationsverbindung, mit zumindest einer nach einem ersten lokale Netzwerke definierenden Standard, insbesondere dem IEEE 802.11 oder seinen Derivaten, funktionierenden und einen ersten Funkversorgungsbereich (WLAN NETWORK) eines lokalen Netzwerks bereitstellenden ersten stationären Funksende-/Funkempfangseinrichtung (AP1...AP5), mit zumindest einer nach einem zweiten Standard, insbesondere GSM, funktionierenden und einen zweiten Funkversorgungsbereich (PSTN/GSM NETWORK) bereitstellenden zweiten stationären Funksende-/Funkempfangseinrichtung (BASESTATION), wobei der erste Funkversorgungsbereich (WLAN NETWORK) und der zweite Funkversorgungsbereich (PSTN/GSM NETWORK) zumindest teilweise überlappen, sowie mit einem gemäß dem ersten und dem zweiten Standard betreibbaren mobilen Funksende-/Funkempfangsgerät (DMD) und mit einer zentralen Schnittstelleneinrichtung (MOBILITY APPLIANCE) zwischen dem lokalen Netzwerk (WLAN NETWORK) und einem vermittelten Telefonnetz (PSTN/GSM NETWORK), **dadurch gekennzeichnet**,
a) dass seitens des mobilen Funksende-/Funkempfangsgerätes (DMD)
a1) Mittel zum Priorisieren vorhanden sind, mit denen eine Sprachdatenübertragung gemäß dem ersten Standard priorisiert wird,
a2) Mittel zum Messen vorhanden sind, mit denen zumindest eine Messung von zumindest einer die Qualität einer gemäß dem ersten Standard funktionierenden Funkverbindung indizierenden Größe, insbesondere eine Empfangsfeldstärkemessung, durchgeführt wird,
a3) Mittel zum Übermitteln vorhanden sind, mit denen eine zumindest die Messergebnisse wiedergebende und eine das lokale Netzwerk betreffende Topologieinformation enthaltende erste Nachricht (#) an die zentrale Schnittstelleneinrichtung (MOBILITY APPLIANCE) übermittelt wird,
b) dass das mobile Funksende-/Funkempfangsgerät (DMD) die von der zentralen Schnittstelleneinrichtung (MOBILITY APPLIANCE) zumindest auf Grundlage einer der ersten Nachrichten (#) gesendete eine Nachricht (INF (#)) mit einer Empfehlung über die Einleitung eines Wechsels des Betreibens einer bestehenden Sprachdatenkommunikationsverbindung vom ersten Funkversorgungsbereich zum zweiten Funkversorgungsbereich empfängt,
c) dass das mobile Funksende-/Funkempfangsgerät (DMD) eine Entscheidung unter Auswertung von gespeicherten Informationen über ein Aktivieren einer Kommunikation gemäß dem zweiten Standard trifft und
c1) bei positiver Entscheidung den Wechsel durchführt (S1),
c2) bei negativer Entscheidung die Sprachdatenkommunikation weiterhin über eine Kommunikation gemäß dem ersten Standard betreibt (S2).

17. Mobiles Endgerät nach Anspruch 16 zum Betreiben einer drahtlosen Kommunikationsverbindung, gekennzeichnet durch weitere Mittel zum Durchführen des Verfahrens nach einem der Ansprüche 2 bis 13.

## Claims

1. A method for operating a wireless communication link, having at least one first stationary radio transmitting/receiving device (AP1...AP5) operating according to a first standard that defines local networks, in particular IEEE 802.11 or its derivatives, and providing a first radio coverage area (WLAN NETWORK) of a local network, having at least one second stationary radio transmitting/receiving device (BASESTATION) operating according to a second standard, in particular GSM, and providing a second radio coverage area (PSTN/GSM NETWORK), with the first radio coverage area (WLAN NETWORK) and the second radio coverage area (PSTN/GSM NETWORK) at least partially overlapping, and having a mobile radio transmitting/receiving device (DMD) which can be operated according to the first and the second standard and having a central interface device (MOBILITY APPLIANCE) between the local network (WLAN NETWORK) and a switched telephone network (PSTN/GSM NETWORK), **characterised in that**,
a) on the part of the mobile radio transmitting/receiving device (DMD)
a1) a voice data communication according to the first standard is prioritised,
a2) at least one measurement, in particular a reception field strength measurement, is carried out of at least one variable which indicates the quality of a radio connection operating according to the first standard,
a3) a first message (#) reproducing at least the measurement results and containing topology information about the local network is sent to the central interface device (MOBILITY APPLIANCE),
b) the central interface device (MOBILITY APPLIANCE) sends, at least on the basis of one of the first messages (#), a message (INFO (#)) to the mobile radio transmitting/receiving device (DMD) with a recommendation to initiate a changeover of the operation of an existing voice data communication connection from the first radio coverage area to the second radio coverage area,
c) the mobile radio transmitting/receiving device (DMD) takes a decision about activating a communication according to the second standard while analysing stored information and
c1) if the decision is positive, carries out the changeover (S1),
c2) if the decision is negative, continues operating the voice data communication by way of a communication according to the first standard (S2).

2. The method of claim 1 wherein the determining of the measurement results is repeated cyclically.

3. The method of claim 2 wherein the communicating of the first message (#) is repeated cyclically.

4. The method of any one of the preceding claims wherein the first message (#) incorporates information identifying the second radio transmitting/receiving device.

5. The method of any one of the preceding claims wherein contents that are organised as a first table (RIM) are accessed as a basis for the decision by the central interface device (MOBILITY APPLIANCE).

6. The method of the preceding claim wherein the first table (RIM) contains topology information about the local network.

7. The method of the preceding claim wherein the topology information is held organised in a memory in such a way that the geographical location of first stationary radio transmitting/receiving devices (AP1...AP5) can be determined.

8. The method of claim 5 wherein the first table (RIM) is held organised in a memory in such a way that it contains activation information about the respective first stationary radio transmitting/receiving devices.

9. The method of any one of the preceding claims wherein the radio transmitting/receiving device (DMD) holds the information, in particular organised as a second table, in a memory of the radio transmitting/receiving device.

10. The method of the preceding claim wherein the information is organised as an assignment of SSID values identifying first stationary radio transmitting/receiving devices (AP1...AP5) to activation information.

11. The method of any one of the preceding claims wherein the central interface device (MOBILITY APPLIANCE) operates as a device providing extension functionality (ENTERPRISE SOFT SWITCH).

12. The method of the preceding claim wherein the central interface device (MOBILITY APPLIANCE) is connected to the local network at least partly by wire.

13. The method of the preceding claim wherein the central interface device (MOBILITY APPLIANCE) operates in such a way that it can communicate wirelessly with the mobile radio transmitting/receiving device (DMD) either directly and/or with the aid of local network (WLAN NETWORK).

14. A communication system for operating a wireless communication link, having at least one first stationary radio transmitting/receiving device (AP1...AP5) operating according to a first standard that defines local networks, in particular IEEE 802.11 or its derivatives, and providing a first radio coverage area (WLAN NETWORK) of a local network, having at least one second stationary radio transmitting/receiving device (BASESTATION) operating according to a second standard, in particular GSM, and providing a second radio coverage area (PSTN/GSM NETWORK), with the first radio coverage area (WLAN NETWORK) and the second radio coverage area (PSTN/GSM NETWORK) at least partially overlapping, and having a mobile radio transmitting/receiving device (DMD) which can be operated according to the first and the second standard and having a central interface device (MOBILITY APPLIANCE) between the local network (WLAN NETWORK) and a switched telephone network (PSTN/GSM NETWORK), **characterised in that**,
a) on the part of the mobile radio transmitting/receiving device (DMD)
a1) prioritising means are provided with which a voice data communication according to the first standard is prioritised,
a2) measuring means are provided with which at least one measurement, in particular a reception field strength measurement, is carried out of at least one variable which indicates the quality of a radio connection operating according to the first standard,
a3) communication means are provided with which a first message (#) reproducing at least the measurement results and containing topology information about the local network is sent to the central interface device (MOBILITY APPLIANCE),
b) the central interface device (MOBILITY APPLIANCE) sends, at least on the basis of one of the first messages (#), a message (INFO (#)) to the mobile radio transmitting/receiving device (DMD) with a recommendation to initiate a changeover of the operation of an existing voice data communication connection from the first radio coverage area to the second radio coverage area,
c) the mobile radio transmitting/receiving device (DMD) takes a decision about activating a communication according to the second standard while analysing stored information and
c1) if the decision is positive, carries out the changeover (S1),
c2) if the decision is negative, continues operating the voice data communication by way of a communication according to the first standard (S2).

15. The communication system of claim 14 for operating a wireless communication link, **characterised by** further means for performing the method of any one of claims 2 to 13.

16. A mobile terminal (DMD) for operating a wireless communication link, having at least one first stationary radio transmitting/receiving device (AP1...AP5) operating according to a first standard that defines local networks, in particular IEEE 802.11 or its derivatives, and providing a first radio coverage area (WLAN NETWORK) of a local network, having at least one second stationary radio transmitting/receiving device (BASESTATION) operating according to a second standard, in particular GSM, and providing a second radio coverage area (PSTN/GSM NETWORK), with the first radio coverage area (WLAN NETWORK) and the second radio coverage area (PSTN/GSM NETWORK) at least partially overlapping, and having a mobile radio transmitting/receiving device (DMD) which can be operated according to the first and the second standard and having a central interface device (MOBILITY APPLIANCE) between the local network (WLAN NETWORK) and a switched telephone network (PSTN/GSM NETWORK), **characterised in that**,
a) on the part of the mobile radio transmitting/receiving device (DMD)
a1) prioritising means are provided with which a voice data communication according to the first standard is prioritised,
a2) measuring means are provided with which at least one measurement, in particular a reception field strength measurement, is carried out of at least one variable which indicates the quality of a radio connection operating according to the first standard,
a3) communication means are provided with which a first message (#) reproducing at least the measurement results and containing topology information about the local network is sent to the central interface device (MOBILITY APPLIANCE),
b) the mobile radio transmitting/receiving device (DMD) receives the one message (INF (#)) with a recommendation to initiate a changeover of the operation of an existing voice data communication connection from the first radio coverage area to the second radio coverage area that is sent by the central interface device (MOBILITY APPLIANCE) at least on the basis of one of the first messages (#),
c) the mobile radio transmitting/receiving device (DMD) takes a decision about activating a communication according to the second standard while analysing stored information and
c1) if the decision is positive, carries out the changeover (S1),
c2) if the decision is negative, continues operating the voice data communication by way of a communication according to the first standard (S2).

17. The mobile terminal of claim 16 for operating a wireless communication link, **characterised by** further means for performing the method of any one of claims 2 to 13.

## Revendications

1. Procédé servant à faire fonctionner une liaison de communication sans fil, avec au moins un premier dispositif immobile d'envoi/de réception radio (AP1... AP5) fonctionnant selon une première norme définissant des réseaux locaux, en particulier selon la norme IEEE 802.11 ou ses dérivés, et fournissant une première zone de couverture radio (WLAN NETWORK) d'un réseau local, avec au moins un deuxième dispositif immobile d'envoi/de réception radio (BASESTATION) fonctionnant selon une deuxième norme, en particulier GSM, et fournissant une deuxième zone de couverture radio (PSTN/GSM NETWORK), sachant que la première zone de couverture radio (WLAN NETWORK) et la deuxième zone de couverture radio (PSTN/GSM NETWORK) se chevauchent au moins en partie, et avec également un appareil mobile d'envoi/de réception radio (DMD) pouvant fonctionner selon la première norme et selon la deuxième norme et avec un dispositif d'interface centrale (MOBILITY APPLIANCE) entre le réseau local (WLAN NETWORK) et un réseau téléphonique (PSTN/GSM NETWORK) de mise en réseau, caractérisé en ce
a) que du côté de l'appareil mobile d'envoi/de réception radio (DMD),
a1) une transmission de données vocales est rendue prioritaire selon la première norme,
a2) au moins une mesure d'au moins une grandeur indiquant la qualité d'une liaison radio fonctionnant selon la première norme, en particulier une mesure de l'intensité du champ de réception, est effectuée,
a3) un premier message (#) reproduisant au moins les résultats de mesure et contenant une information de topologie concernant le réseau local est transmis au dispositif d'interface centrale (MOBILITY APPLIANCE),
b) en ce que le dispositif d'interface centrale (MOBILITY APPLIANCE) envoie, au moins sur la base d'un des premiers messages (#), un message (INFO (#)) comprenant une recommandation concernant la mise en oeuvre d'un changement du fonctionnement d'une liaison de communication de données vocales existante entre la première zone de couverture radio et la deuxième zone de couverture radio, à l'appareil mobile d'envoi/de réception radio (DMD),
c) en de que l'appareil mobile d'envoi/de réception radio (DMD) prend une décision en évaluant des informations mémorisées par l'intermédiaire d'une activation d'une communication selon la deuxième norme et
c) en cas de décision positive, effectue le changement (S1),
c2) en cas de décision négative, continue de faire fonctionner la communication de données vocales par l'intermédiaire d'une communication selon la première norme (S2).

2. Procédé selon la revendication 1, **caractérisé en ce que** la détermination des résultats de mesure est répétée de manière cyclique.

3. Procédé selon la revendication 2, **caractérisé en ce que** la transmission du premier message (#) est répétée de manière cyclique.

4. Procédé selon l'une quelconque des revendications précédentes, **caractérisé en ce qu'**une information identifiant le deuxième dispositif d'envoi/de réception radio est intégrée dans le premier message (#).

5. Procédé selon l'une quelconque des revendications précédentes, **caractérisé en ce que** la décision prise du côté du dispositif d'interface centrale (MOBILITY APPLIANCE) se base sur des contenus organisés sous la forme d'un premier tableau (RIM).

6. Procédé selon la revendication précédente, **caractérisé en ce que** le premier tableau (RIM) contient une information de topologie concernant le réseau local.

7. Procédé selon la revendication précédente, **caractérisé en ce que** l'information de topologie est conservée de manière organisée dans une mémoire de telle manière que la position géographique des premiers dispositifs immobiles d'envoi/de réception radio (AP1... AP5) peut être déterminée.

8. Procédé selon la revendication 5, **caractérisé en ce que** le premier tableau (RIM) est conservé de manière organisée dans une mémoire de telle manière qu'il contient des informations d'activation concernant les divers premiers dispositifs immobiles d'envoi/de réception radio respectivement.

9. Procédé selon l'une quelconque des revendications précédentes, **caractérisé en ce que** l'appareil d'envoi/de réception radio (DMD) conserve les informations, en particulier organisées sous la forme d'un deuxième tableau, dans une mémoire de l'appareil d'envoi/de réception radio.

10. Procédé selon la revendication précédente, **caractérisé en ce que** les informations sont organisées sous la forme d'une attribution de valeurs SSID identifiant des premiers dispositifs immobiles d'envoi/de réception radio (AP1... AP5) concernant une info d'activation.

11. Procédé selon l'une quelconque des revendications précédentes, **caractérisé en ce que** le dispositif d'interface centrale (MOBILITY APPLIANCE) fonctionne sous la forme d'un dispositif (ENTERPRISE SOFT SWITCH) fournissant une fonctionnalité accessoire.

12. Procédé selon la revendication précédente, **caractérisé en ce que** le dispositif d'interface centrale (MOBILITY APPLIANCE) est relié au réseau local au moins en partie de manière filaire.

13. Procédé selon la revendication précédente, **caractérisé en ce que** le dispositif d'interface centrale (MOBILITY APPLIANCE) fonctionne de telle manière qu'il peut communiquer directement et/ou avec le concours du réseau local (WLAN NETWORK) sans fil avec l'appareil mobile d'envoi/de réception radio (DMD).

14. Système de communication sous la forme d'un ensemble servant à faire fonctionner une liaison de communication sans fil, avec au moins un premier dispositif immobile d'envoi/de réception radio (AP1... AP5) fonctionnant selon une première norme définissant des réseaux locaux, en particulier selon la norme IEEE 802.11 ou ses dérivés, et fournissant une première zone de couverture radio (WLAN NETWORK) d'un réseau local, avec au moins un deuxième dispositif immobile d'envoi/de réception radio (BASESTATION) fonctionnant selon une deuxième norme, en particulier GSM, et fournissant une deuxième zone de couverture radio (PSTN/GSM NETWORK), sachant que la première zone de couverture radio (WLAN NETWORK) et la deuxième zone de couverture radio (PSTN/GSM NETWORK) se chevauchent au moins en partie, et avec également un appareil mobile d'envoi/de réception radio (DMD) pouvant fonctionner selon la première et selon la deuxième norme et un dispositif d'interface centrale (MOBILITY APPLIANCE) entre le réseau local (WLAN NETWORK) et un réseau téléphonique (PSTN/GSM NETWORK) de mise en réseau,
caractérisé en ce
a) que du côté de l'appareil mobile d'envoi/de réception (DMD),
a1) des moyens servant à prioriser sont disponibles, avec lesquels une transmission de données vocales est rendue prioritaire selon la première norme,
a2) des moyens servant à mesurer sont disponibles, avec lesquels au moins une mesure d'au moins une grandeur indiquant la qualité d'une liaison radio fonctionnant selon la première norme, en particulier une mesure de l'intensité de champ, est effectuée,
a3) des moyens servant à la transmission sont disponibles, avec lesquels un premier message (#) reproduisant au moins les résultats de mesure et contenant une information de topologie concernant le réseau local est transmis au dispositif d'interface centrale (MOBILITY APPLIANCE),
b) en ce que le dispositif d'interface centrale (MOBILITY APPLIANCE) envoie, au moins sur la base d'un des premiers messages (#), un message (INFO (#)) comprenant une recommandation concernant la mise en oeuvre d'un changement de fonctionnement d'une liaison de communication de données vocales existante, entre la première zone de couverture radio et la deuxième zone de couverture radio, à l'appareil mobile d'envoi/de réception radio (DMD),
c) en ce que l'appareil mobile d'envoi/de réception radio (DMD) prend une décision en évaluant des informations mémorisées concernant une activation d'une communication selon la deuxième norme, et
c1) en cas de décision positive, effectue le changement (S1),
c2) en cas de décision négative, continue de faire fonctionner la communication de données vocales par l'intermédiaire d'une communication selon la première norme (S2).

15. Système de communication selon la revendication 14 servant à faire fonctionner une liaison de communication sans fil, **caractérisé par** d'autres moyens servant à exécuter le procédé selon l'une quelconque des revendications 2 à 13.

16. Terminal mobile (DMD) servant à faire fonctionner une liaison de communication sans fil, avec au moins un premier dispositif immobile d'envoi/de réception radio (AP1... AP5) fonctionnant selon une première norme définissant des réseaux locaux, en particulier selon la norme IEEE 802.11 ou ses dérivés, et fournissant une première zone de couverture radio (WLAN NETWORK) d'un réseau local, avec au moins un deuxième dispositif immobile d'envoi/de réception radio (BASESTATION) fonctionnant selon une deuxième norme, en particulier GSM, et fournissant une deuxième zone de couverture radio (PSTN/GSM NETWORK), sachant que la première zone de couverture radio (WLAN NETWORK) et la deuxième zone de couverture radio (PSTN/GSM NETWORK) se chevauchent au moins en partie, et avec également un appareil mobile d'envoi/de réception radio (DMD) pouvant fonctionner selon la première et selon la deuxième norme et un dispositif d'interface centrale (MOBILITY APPLIANCE) entre le réseau local (WLAN NETWORK) et un réseau téléphonique (PSTN/GSM NETWORK) de mise en réseau, caractérisé en ce
a) que du côté de l'appareil mobile d'envoi/de réception (DMD),
a1) des moyens servant à prioriser sont disponibles, avec lesquels une transmission de données vocales est rendue prioritaire selon la première norme,
a2) des moyens servant à mesurer sont disponibles, avec lesquels au moins une mesure d'au moins une grandeur indiquant la qualité d'une liaison radio fonctionnant selon la première norme, en particulier une mesure de l'intensité de champ, est effectuée,
a3) des moyens servant à la transmission sont disponibles, avec lesquels un premier message (#) reproduisant au moins les résultats de mesure et contenant une information de topologie concernant le réseau local est transmis au dispositif d'interface centrale (MOBILITY APPLIANCE)),
b) en ce que l'appareil mobile d'envoi/de réception radio (DMD) reçoit le message (INF (#)), envoyé par le dispositif d'interface centrale (MOBILITY APPLIANCE) au moins sur la base d'un des premiers messages (#), comprenant une recommandation concernant la mise en oeuvre d'un changement de fonctionnement d'une liaison de communication de données vocales existante, entre la première zone de couverture radio et la deuxième zone de couverture radio,
c) en ce que l'appareil mobile d'envoi/de réception radio (DMD) prend une décision en évaluant des informations mémorisées concernant une activation d'une communication selon la deuxième norme, et
c1) en cas de décision positive, effectue le changement (S1),
c2) en cas de décision négative, continue de faire fonctionner la communication de données vocales par l'intermédiaire d'une communication selon la première norme (S2).

17. Terminal mobile selon la revendication 16 servant à faire fonctionner une liaison de communication sans fil, **caractérisé par** d'autres moyens servant à exécuter le procédé selon l'une quelconque des revendications 2 à 13.
